# EUROPÄISCHE PATENTANMELDUNG

(11) **EP 1 464 388 A1**
(43) Veröffentlichungstag der Anmeldung: **06.10.2004**
(21) Anmeldenummer: 03007766.3
(22) Anmeldetag: 04.04.2003
(51) Int. Cl.: B01J 19/12, B01J 19/20, H05B 6/80, B01F 7/00, B01F 15/06, B01F 13/04

(54) **Mikrowellen-Behandlung von chemischen Substanzen in einem Behälter**

(71) Anmelder: Mikrowellen-Systeme MWS GmbH, 9435 Heerbrugg (CH)
(72) Erfinder: Lautenschläger, Werner, 88299 Leutkirch (DE)
(74) Vertreter: Rupp, Christian, Dipl.Phys.

(57) **Zusammenfassung**

Die Erfindung betrifft eine Vorrichtung 1 zur Durchflußbehandlung von chemischen Substanzen in einem Mikrowellenfeld, aufweisend einen Mikrowellenraum 9, in dem Mikrowellenstrahlung auf die Substanzen einwirkt, und einen Durchflußbehälter 12, der sich zumindest teilweise in dem Mikrowellenraum 9 erstreckt und in dem sich die Substanzen translatorisch bewegen. Um bei Gewährleistung eines leistungsfähigen Anschlusses eine einfache Ausgestaltung zu erreichen, ist eine Einrichtung zur Spiralführung der Substanzen in dem Durchflußbehälter 12 vorgesehen.

## Beschreibung

Die Erfindung betrifft eine Vorrichtung und ein Verfahren zurMikrowellen-Behandlung wenigstens einer chemischen Substanz in einem Behälter.

Es ist bei der Behandlung wenigstens einer chemischen Substanz bekannt, die chemische Substanz in einem Behandlungsraum eines Durchflußbehälters einem Hochfrequenzfeld auszusetzen, wodurch sich die chemische Substanz erhitzen läßt.

Der Zweck der Durchflußbehandlung kann verschieden sein. Die Durchflußbehandlung kann z.B. dazu dienen, eine feste und/oder flüssige chemische Substanz bzw. ein chemisches Substanzgemisch mit Wärme zu behandeln, zu destillieren, aufzuschließen, chemische Reaktionen einzuleiten und durchzuführen und/oder bei einem chemischen Substanzgemisch eine chemische Substanztrennung durchzuführen.

Eine Vorrichtung und ein Verfahren zur Durchflußbehandlung sind z.B. in der WO 01/72413A1 beschrieben. Bei der vorbekannten Vorrichtung erstreckt sich ein rohrförmiger Durchflußbehälter vertikal durch ein Gehäuse, das einen den Durchflußbehälter umgebenden Mikrowellenraum umschließt, in den ein Mikrowellenfeld mit Hilfe eines Generators generierbar ist. Oberseitig und unterseitig kann der sich im Durchflußbehälter befindliche freie Behandlungsraum einen Einlaß bzw. Auslaß aufweisen, der jeweils mit einer Zuführungs- oder Abführungsleitung verbunden ist.

Bei dieser vorbekannten Vorrichtung kann es je nach Baufschlagung des Mikrowellenraums mit dem Mikrowellenfeld zu einer ungleichmäßigen Erhitzung kommen, weil die Beaufschlagung des Mikrowellenraums mit dem Mikrowellenfeld nicht gleichmäßig erfolgt und deshalb auch die Erhitzung ungleichmäßig ist.

Um diesen Nachteil zu vermeiden oder wenigstens zu vermindern, ist es an sich bekannt, mehrere um eine gemeinsame Drehachse verteilt angeordnete, mit einer chemischen Substanz gefüllte Behälter während der Beaufschlagung mit dem Mikrowellenfeld um die Drehachse zu drehen. Durch diese Drehbewegung gelangen die Behälter mit der chemischen Substanz translatorisch in unterschiedliche Positionen im Mikrowellenraum, wodurch die Beaufschlagung mit dem Mikrowellenfeld vergleichmäßigt wird.

Der Erfindung liegt die Aufgabe zugrunde, eine Vorrichtung und ein Verfahren zur Durchflußbehandlung von wenigstens einer chemischen Substanz so auszugestalten, daß bei Gewährleistung einer einfachen und kleinen, insbesondere schmalen, Bauweise eine gleichmäßigere Behandlung der Subtanz erreicht wird.

Diese Aufgabe wird durch die Merkmale des Anspruchs 1 bzw. 16 gelöst. Vorteilhafte Weiterbildungen der Erfindung sind in den zugehörigen Unteransprüchen beschrieben.

Bei der Erfindung nach den Ansprüchen 1 und 16 ist eine Einrichtung zur Spiralführung der Substanz im Durchflußbehälter vorgesehen, die eine spiralförmige Führung der Substanz beim Durchfluß gewährleistet. Hierdurch läßt sich die Vorrichtung im Vergleich mit dem Stand der Technik wesentlich vereinfachen, weil die spiralförmige Führung eine Durchflußbewegung und zugleich eine translatorische Bewegung ermöglicht und eine Drehlagerung und ein Antrieb für den Durchflußbehälter, wie er beim Stand der Technik bekannt ist, nicht erforderlich ist. Die erfindungsgemäße Ausgestaltung ermöglicht deshalb nicht nur eine Vereinfachung der Bauweise, sondern auch eine kleine, insbesondere schmale Bauweise, da eine Spiralführung sich in einfacher Bauweise verwirklichen läßt und nur wenig Raum, insbesondere einen schmalen Raum, beansprucht. Dabei läßt sich eine große Durchflußleistung erreichen.

Bei einer Vorrichtung zur Durchflußbehandlung von chemischen Substanzen besteht in vielen Fällen die Forderung, einen homogenen Zustand der Substanz aufrechtzuerhalten. Insbesondere dann, wenn ein Gemisch oder mehrere und unterschiedliche Substanzen zugleich den Durchflußbehälter durchströmen und behandelt werden, besteht die Gefahr, daß die Homogenität während der Behandlung beeinträchtigt wird oder die Substanzen sich entmischen oder die Homogenität unzureichend ist.

Der Erfindung liegt deshalb im weiteren die Aufgabe zugrunde, eine Vorrichtung und ein Verfahren zur Durchflußbehandlung von wenigstens einer chemischen Substanz so weiterzubilden, daß die Substanz bzgl. ihrer Homogenität nicht beeinträchtigt wird, vorzugsweise verbessert wird.

Es sei an dieser Stelle angemerkt, dass unter der Bezeichnung "Durchfluss" nicht nur die Förderung von Flüssigkeiten, sondern auch von anderen Medien, wie bspw. von Feststoffen zu verstehen ist.

Diese Aufgabe wird durch die Merkmale des Anspruchs 2 bzw. 17 gelöst. Vorteilhafte Weiterbildungen der Erfindung sind in den zugehörigen Unteransprüchen beschrieben.

Bei der Erfindung nach den Ansprüchen 2 und 17 ist eine Mischeinrichtung zur Durchmischung der Substanz während des Durchflusses durch den Durchflußbehälter vorgesehen. Hierdurch wird der homogene Zustand der Substanz aufrechterhalten oder verbessert. Die erfindungsgemäße Ausgestaltung eignet sich deshalb auch für geringe Durchflußgeschwindigkeiten, bei denen die Gefahr einer Entmischung besonders besteht.

Die erfindungsgemäße Mischeinrichtung und/oder Spiralführung läßt sich in einfacher und kostengünstig herstellbarer Weise durch eine Förderschnecke bilden, die aufgrund der wendelförmigen Form bzw. Schneckenform eine Spiralführung für die Durchflußsubstanz bei ständiger Richtungsänderung vorgibt. Dies bewirkt beim Durchfluß in der Substanz eine fortwährende Vermischung, die nicht nur einer Entmischung entgegenwirkt, sondern auch den Mischzustand verbessert. Die Wirksamkeit wird dadurch noch weiter verbessert, daß beim Durchfluß die Substanz fortwährend an der Innenwand der die Förderschnecke umgebenden Umfangswand des Durchflußbehälters reibt und dadurch die Wirkung auf die Substanz, sich zu vermischen, vergrößert wird.

Die erfindungsgemäße Vorrichtung läßt sich auch bei einem großen Durchflußdurchsatz in einfacher und kleiner und somit kostengünstiger Bauweise verwirklichen. Dabei läßt sich die Vorrichtung auch in schmaler und langer bzw. hoher Bauweise verwirklichen.

Es ist im weiteren von Vorteil, wenn der Durchflußbehälter den Mikrowellenraum an einer Seite überragt. In diesem überragenden Abschnitt lassen sich unabhängig von den erfindungsgemäßen Ausgestaltungen nach Anspruch 1 und 2 andere vorteilhafte Ausgestaltungen verwirklichen, z.B. ein Ein- oder Auslaß für den Durchflußbehälter, der sich axial oder quer dazu bzw. radial erstrecken kann.

In dem den Mikrowellenraum überragenden Bereich des Durchflußbehälters läßt sich auch bei einfacher Ausgestaltung und vorteilhafter Wirksamkeit eine Kühl- oder Heizvorrichtung für die durchfließende Substanz anordnen.

Die bezüglich den erfindungsgemäßen Ausgestaltungen nach Anspruch 1 und 2 beschriebenen Vorteile gelten auch für die erfindungsgemäßen Verfahren nach den Ansprüchen 16 und 17 entsprechend.

Nachfolgend werden vorteilhafte Ausgestaltungen der Erfindung anhand von bevorzugten Ausführungsbeispielen und Zeichnungen näher erläutert. Es zeigt:
Fig. 1 eine erfindungsgemäße Vorrichtung zur Behandlung einer chemischen Substanz im Behandlungsraum eines Durchflußbehälteres im vertikalen Schnitt;

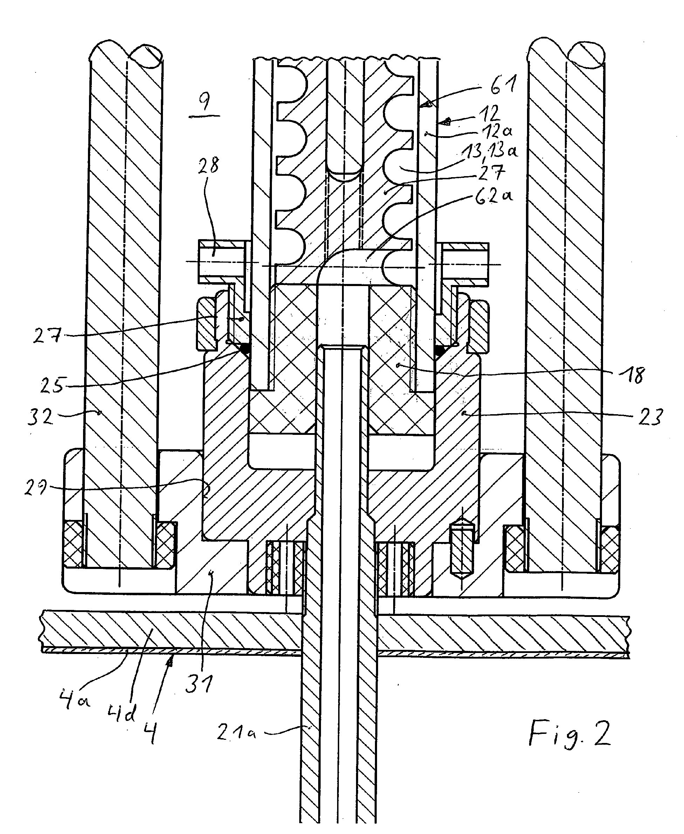

Fig. 2 den unteren Bereich der Vorrichtung in vergrößerter Darstellung;
Fig. 3 den oberen Bereich der Vorrichtung in vergrößerter Darstellung.

Die in ihrer Gesamtheit mit 1 bezeichnete Vorrichtung ist ein vorzugsweise mit Rädern 2 ausgebildetes Standgerät mit einem Traggestell 3, auf dem ein im horizontalen Querschnitt rundes oder viereckiges Gehäuse 4 angeordnet ist, dessen horizontale Querschnittsgröße in etwa der horizontalen Querschnittsgröße des Traggestells 3 entsprechen oder kleiner sein kann.. Das Gehäuse 4 ist durch ein Gelenk 5 mit einer horizontalen Gelenkachse schwenkbar gelagert, wobei das Gelenk 5 vorzugsweise im Bereich einer der beiden seitlichen Ränder des Gehäuses 4 angeordnet ist. Hierdurch kann die Vorrichtung 1 in einer vertikalen Schwenkebene aus ihrer dargestellten aufrechten Anordnung in eine geneigte Anordnung oder bis in eine horizontale Anordnung (andeutungsweise dargestellt) schwenkbar und in den Schwenk-Endstellungen oder auch in wahlweisen Zwischenstellungen durch eine Feststellvorrichtung 6 feststellbar, die z.B. in das Gelenk 5 integriert sein kann oder davon einen Abstand aufweisen kann und das Gelenk 5 im festgestellten Zustand verstarrt. Das Traggestell 3 kann z.B. ein Rahmengestell sein, das auf wenigstens zwei einseitig angeordneten Rädern 2 verfahrbar ist und auf der gegenüberliegenden Seite ein Stützbein aufweist oder insgesamt auf drei oder vier Rädern steht und verfahrbar ist.

Das Gehäuse 4 weist eine Höhe H auf, die größer ist als seine horizontale Querschnittsabmessung, so daß das Gehäuse 4 eine säulenförmige Form aufweist, die hohlquaderförmig oder hohlzylindrisch sein kann. Die Bodenwand, die Deckenwand und die Umfangswand des Gehäuses 4 sind mit 4a, 4b und 4c bezeichnet. Dem Gehäuse 4 ist ein Generator 7 zum Erzeugen eines Hochfrequenzfeldes 8 im Innenraum des Gehäuses 4 zugeordnet, der somit ein Mikrowellenraum 9 ist. Der Generator 7 kann z.B. seitlich am Gehäuse 4 angeordnet sein. Es kann sich um einen Mikrowellen-Generator handeln, der im Funktionsbetrieb Mikrowellen in den Mikrowellenraum 9 einkoppelt, wie es an sich bekannt ist. In der aufrechten bzw. vertikalen Stellung kann die Vorrichtung 1 durch einen seine Schwenkbewegung nach oben begrenzenden Anschlag 11 begrenzt sein, der gegen den oberen Bereich des Traggestells 3 stößt.

Im Gehäuse 4 befindet sich z.B. in mittiger Position ein Durchflußbehälter 12, in dem ein Aufnahmeraum 13 für eine zu behandelnde bzw. zu erhitzende chemische Substanz angeordnet ist. Der Durchflußbehälter 12 ist durch eine Haltevorrichtung 14 im Gehäuse 4 gehalten, die beim Ausführungsbeispiel aus einem unteren Haltevorrichtungsteil 14a im Bodenbereich des Gehäuses 4 und einem oberen Haltevorrichtungsteil 14b im oberen Bereich des Gehäuses 4 gebildet ist.

Der Durchflußbehälter 12 ist von länglicher bzw. rohrförmiger Bauform und etwa vertikal angeordnet, und er weist eine Höhe H1 auf, die vorzugsweise größer ist als die Höhe H des Gehäuses 4. Deshalb überragt der Durchflußbehälter 12 das Gehäuse 4. Beim Ausführungsbeispiel durchsetzt er die Deckenwand 4b des Gehäuses 4 in einem Durchführungsloch 15 und er überragt das Gehäuse 4 nach oben, z.B. um etwa die Hälfte der Höhe H des Gehäuses 4, so daß die Höhe H1 etwa 1,5 H entspricht.

Unter- und oberseitig ist der Durchflußbehälter 12 durch einen Verschluß 16, 17 verschlossen, der z.B. jeweils einen Stopfen 18, 19 aufweisen kann, der in die Umfangswand paßt und diese nach unten bzw. oben abdichtet. Die oder wenigstens der untere Stopfen 18 kann einen Flansch aufweisen, der an der zugehörigen Seite an der Umfangswand 12a des Durchflußbehälters 12 anliegt.

Die Zuführung der zu behandelnden oder zu erhitzenden chemischen Substanz in den Aufnahmeraum 13 kann jeweils durch eine Förderleitung befolgen, die den zugehörigen Stopfen axial durchsetzt oder innenseitig vom Stopfen die Umfangswand 12a etwa radial durchsetzt. Beim Ausführungsbeispiel erstreckt sich die Förderleitung 21 axial von unten in den Durchflußbehälter 12, wobei es den Gehäuseboden 4a in einem Durchführungsloch durchsetzt und in ein passendes Steckloch im Stopfen 18 eingesteckt ist.

Zur zusätzlichen Halterung und vorzugsweise auch Abdichtung weist das Haltevorrichtungsteil 14a ein topfförmiges Halteteil 23 auf, dessen Topfkammer der Außenquerschnittsform und -größe des Durchflußbehälters 12 mit Bewegungsspiel passend entspricht, wobei das untere Ende des Durchflußbehälters 12 darin eingesteckt ist und durch einen Dichtring 25 abgedichtet sein kann. Dieser kann zwischen einer z.B. konischen Schulterfläche 26 des Halteteils 23 und einer in das Halteteil 23 eingeschraubten Buchse 27 mit Drehangriffselementen 28 für eine Drehwerkzeug elastisch zusammengedrückt sein, um die Abdichtung auch für Überdrücke zu gewährleisten. Das Halteteil 23 weist aussen vorzugsweise eine zylindrische Form auf, und es sitzt in einer oberseitigen Stufenausnehmung 29 eines Spannrings 31, in dem mehrere, z.B. drei Stück, auf dem Umfang gleichmäßig verteilte Streben 32 verankert, z.B. verschraubt, sind, die sich nach oben bis zur Deckenwand 4b erstrecken und dort am Rand des Durchführungslochs 15 verschraubt sind.

Im Bereich der Deckenwand 4b weist der Durchflußbehälter 12 ein Flanschteil 33 auf, dessen Flansch 33a auf dem Rand des Durchführungslochs 15 aufliegt und durch auf dem Umfang verteilt angeordnete Schrauben 34 verschraubt ist, die den Flansch 33a, die Deckenwand 4b durchfassen und in die Streben 32 eingeschraubt sind. Hierdurch ist der Durchflußbehälter 12 an der Deckenwand 4b befestigt und von oben montierbar, wobei der sich vom Flanschteil 33 nach unten erstreckende Durchflußbehälterabschnitt durch das Durchführungsloch 15 in das Gehäuse 4 einführbar ist. Das Halteteil 23 und gegebenenfalls auch ein Anschlußrohr 21 a der Förderleitung 21 können vormontierte Teile des Durchflußbehälters 12 sein und mit diesem durch Einführen von oben in das Gehäuse montierbar sein und nach oben wieder demontierbar sein. Das Anschlußrohr 21 a durchfaßt die Bodenwand 4a und eine darauf befestigte Bodenplatte 4d in einem Durchführungsloch. Der Flansch 33 kann die Umfangswand 12a ersetzen und mit einem und/oder unterem Umfangswandabschnitt vorhanden sein, z.B. durch Schrauben, Kleben oder Schweißen.

Die Vorrichtung 1 weist außerdem eine Kühl- oder Heizvorrichtung 35 auf, die in dem das Gehäuse 4 überragenden Abschnitt a des Durchflußbehälters 12 angeordnet ist und beim Ausführungsbeispiel durch einen die Umfangswand 12a umgebenden Wärmetauscher 36 gebildet ist, dem bei einer Kühlvorrichtung ein kaltes Medium und bei einer Heizvorrichtung ein heißes Medium dem Kreislauf zugeführt wird. Beim Ausführungsbeispiel weist der Wärmetauscher 36 ein die Umfangswand 12a in einem Ringabstand umgebendes Wärmetauschergehäuse 37 auf, dessen Innenraum 38 in seinen axialen Endbereichen einen Einlaß 39 und einen Auslaß 41 aufweist, die an einen zugehörigen Kühl- oder Heizmedienkreislauf anschließbar sind.

Im oberen Endbereich des Aufnahmeraums 13, hier oberhalb der Kühl- oder Heizvorrichtung 35, mündet ein Anschlußrohr 42, die Umfangswand 12a durchsetzend in den Behandlungs- oder Aufnahmeraum 13. Bei dem Anschlußrohr 42 kann es sich um einen seitlichen Einlaß oder Auslaß handeln, dessen Öffnung durch einen Verschluß, z.B. einem Schraubdeckel 43; Schraubdeckel 43, wahlweise verschließbar ist. Das Anschlußrohr 42 eignet sich u.a. für eine Zuführung einer weiteren chemischen Substanz, z.B. eine kleinstückige Substanz oder ein Pulver.

Um im Betrieb der Vorrichtung 1 einen Druck im Aufnahmeraum 13 begrenzen zu können, ist dem Durchflußbehälter 12 im oberen Bereich ein Druckbegrenzungsventil 44 zugeordnet, das einen Auslaßkanal 45 normalerweise sperrt und dann öffnet, wenn der Druck im Aufnahmeraum 13 einen bestimmten Wert übersteigt. Beim Ausführungsbeispiel durchsetzt der Auslaßkanal 45 die Umfangswand 12a, und er erstreckt sich z.B. winkelförmig in ein Ventilgehäuse 46, in dem ein Verschlußelement 47 durch eine Ventilfeder 48 in seine den Auslaßkanal 45 verschließende Stellung vorgespannt ist. Wenn der Druck so groß wird, daß die durch ihn am Verschlußelement 47 erzeugte Kraft die Kraft der Ventilfeder 48 übersteigt, wird das Verschlußelement 47 in seine Offenstellung verschoben, in der der Auslaßkanal 45 offen ist und der Druck sich nach außen entspannen kann. Die Kraft der Ventilfeder 48 und somit auch der Druck, bei dem das Druckbegrenzungsventil 44 öffnet, ist vorzugsweise einstellbar. Dies läßt sich in einfacher Weise dadurch erreichen, daß das Widerlager 49, an dem sich die Ventilfeder 48 abstützt, in der Längsrichtung der Ventilfeder 48 verstellbar und in der jeweils eingestellten Stellung feststellbar ist. Das Widerlager 49 kann durch eine Innenschulterfläche einer Gewindehülse 51 gebildet sein, in der die Ventilfeder 48, z.B. eine Wendelfeder oder wenigstens eine Tellerfeder, angeordnet ist. Das Widerlager 49 weist rückseitig wenigstens ein Werkzeugangriffselement 52 für den Drehangriff eines Drehwerkzeugs auf, mit dem es wahlweise ein- oder ausschraubbar und damit das Druckbegrenzungsventil 44 einstellbar ist. Der Einlaß in das Ventilgehäuse 46 kann durch eine Gewindehülse 53 gebildet sein, die die Umfangswand 12a durchsetzt und daran befestigt ist, wobei das Ventilgehäuse 46 auf das freie Ende der Gewindehülse 53 aufgeschraubt und durch eine Kontermutter 54 festgestellt ist. Der Auslaß 50 des Ventilgehäuses 46 ist durch eine Verschraubungsarmatur 54 gebildet, an die ein weiterführender Schlauch oder ein weiterführendes Rohr anschließbar ist.

Es wird eine einfache, herstellungsgünstige und kostengünstige Bauweise erreicht, wenn das Verschlußelement 47 oder ein das Verschlußelement 47 betätigender Stößel 47a, der unter der Kraft der Feder 48 steht, mit der Gewindehülse 51 eine vorfertigbare und in einfacher Weise montierbare Baueinheit bildet, die wahlweise ein- oder ausschraubbar ist. Beim Ausführungsbeispiel ist die Gewindehülse 51 in einer Aufnahmehülse 51 a eingeschraubt, die wiederum in eine entsprechende offene Ausnehmung 51b im Ventilgehäuse 46 fest eingeschraubt und gesichert ist, z.B. durch einen am Ventilgehäuse 46 anliegenden Flansch. Die Aufnahmehülse 51 a kann ebenfalls Teil der vorbeschriebenen Baueinheit sein.

Es ist im weiteren vorteilhaft, dem Druckbegrenzungsventil 44 einen z.B. optisch sichtbaren Indikator 44a zuzuordnen, der den im Aufnahmeraum 13 vorhandenen Druck anzeigt oder eine obere Grenze dieses Druckes anzeigt. Beim Ausführungsbeispiel ist der Indikator 44a durch eine Stößelverlängerung 47b gebildet, die sich koaxial durch die Ringfeder 48 erstreckt und die das Widerlager 49 bildende Rückwand der Gewindehülse 51 mit geringem Bewegungsspiel durchsetzt. Hierbei kann die Endfläche der Stößelverlängerung 47b oder eine Markierung auf der Mantelfläche der die Rückwand überragenden Stößelverlängerung 47b den optischen Indikator 44a bilden.

Beim Ausführungsbeispiel ist das Verschlußelement 47 ein koaxial zum ersten Auslaßleitungsabschnitt 45a angeordneter Stopfen, dessen vorzugsweise als Kegelfläche ausgebildete Schließfläche an einer den ersten Auslaßleitungsabschnitt 45a erweiternden, vorzugsweise entsprechend kegelförmig ausgebildeten Schulterfläche 45b anliegt, die den Ventilsitz bildet.

Um die sich im Betrieb der Vorrichtung 1 im Aufnahmeraum 13 einstellende Temperatur messen zu können, ist ein Temperatursensor 55 vorgesehen, der die Betriebstemperatur im Aufnahmeraum 13 mißt und durch eine Signalleitung 56 mit einer nicht dargestellten elektrischen Steuereinrichtung verbunden ist, die eine der Temperatur entsprechende Signalabgabe steuern kann oder den Generator 7 abschalten kann oder dessen Leistung durch Verringerung oder Vergrößerung so regeln kann, daß die Betriebstemperatur auf einen bestimmten Sollwert geregelt wird. Eine bevorzugte Anordnungsstelle für den Temperatursensor 54 ist das Flanschteil 33, in dessen Bereich eine vergrößerte Materialmenge zur Anordnung des Temperatursensors 55 vorhanden ist, der sich z.B. in einer Einschraubpatrone 55a befindet.

Im Rahmen der Erfindung kann der Behandlungs- bzw. Aufnahmeraum 13 durch den von der Umfangswand 12a umschlossenen Hohlraum des Durchflußbehälters 12 gebildet sein. In einem solchen Fall steht der gesamte Querschnitt des rohrförmigen Durchflußbehälters 12 als Durchflußquerschnitt zur Verfügung. Dabei kann im unteren Bereich und im oberen Bereich des Aufnahmeraums 13 jeweils ein Einlaß oder Auslaß vorhanden sein, durch die die chemische Substanz entweder von unten nach oben oder von oben nach unten strömen kann. Beim Ausführungsbeispiel bildet die Förderleitung 21 bzw. das Anschlußrohr 21 a einen Einlaß für die strömungsfähige chemische Substanz, wobei ein im oberen Bereich des Aufnahmeraums 13 angeordneter Auslaß, z.B. der Auslaß 50, mit dem Einlaß zusammenwirken kann.

Beim Ausführungsbeispiel ist im Aufnahmeraum 13 ein Raumteiler 57 angeordnet, der eine an die Querschnittsgröße und an die kreisrunde Querschnittsform der Umfangswand 12a mit Bewegungsspiel angepaßte Querschnittsform aufweist und außerdem einen durch einen Kanal im Raumteiler 57 gebildeten Behandlungsraum 13a aufweist, der sich längs durchgehend im Raumteiler 57 erstreckt und dadurch einen längs durchgehenden Strömungskanal für die zu behandelnde oder zu erhitzende chemische Substanz bildet. Der Behandlungsraum 13a ist somit ein Teil des Aufnahmeraums 13. Der Behandlungsraum 13a, der aufgrund des Vorhandenseins des Raumteilers 57 nur einen Teil der Querschnittsgröße des Aufnahmeraums 13 beträgt, ist beim Ausführungsbeispiel wendelförmig, z.B. wie ein Gewinde geformt, so daß seine Länge ein mehrfaches der Länge des Raumteilers 57 beträgt, der sich beim Ausführungsbeispiel vom unteren Verschluß 16 bis zum oberen Verschluß 17 erstreckt. Der wendelförmige Behandlungsraum 13a kann durch eine wendelförmige Nut in der zylindrischen Mantelfläche des Raumteilers 57 gebildet sein, deren Nutgrund oder Querschnittsform z.B. halbkreisförmig geformt sein kann. Bei einer solchen Ausgestaltung wird der Behandlungsraum 13a aussen durch die Innenfläche der Umfangswand 12a begrenzt. In einem solchen Fall ist der Raumteiler 57 wie eine Förderschnecke ausgebildet. Die Querschnittsform des wendelförmigen Behandlungsraums 13a ist vorzugsweise halbkreisförmig.

Es ist aus noch zu erklärenden Gründen vorteilhaft, den Raumteiler 57 drehbar im Durchflußbehälter 12 anzuordnen und durch einen Drehantrieb 58 im Betrieb der Vorrichtung 1 zu drehen. Beim Drehen wandern die in der Queransicht sichtbaren Wendelabschnitte des Behandlungsraums 13a in die Längsrichtung des Raumteilers 57 und zwar je nach Drehrichtung nach oben oder nach unten, wie es bei einem Gewinde der Fall ist.

Die Ausgestaltung mit dem Raumteiler 57 bzw. der Förderschnecke ist aus mehreren Gründen vorteilhaft.

Im Funktionsbetrieb der Vorrichtung 1 wird die zu behandelnde chemische Substanz längs durch den Durchflußbehälter 12 gefördert, z.B. mittels einer Pumpe P, die beim Ausführungsbeispiel in der Förderleitung 21 angeordnet ist. Aufgrund der wendelförmigen Form des Behandlungsraums 13a ist der Strömungsweg im Vergleich mit der Vertikallänge wesentlich vergrößert und deshalb ist auch die Förderstrecke und die Verweilzeit der Substanz im Bereich des Mikrowellenraums 9 vergrößert, und es lassen sich dadurch besondere Reaktionen in der chemischen Substanz erreichen, z.B. aufgrund der längeren Bestrahlung, einer höheren Temperatur und eines höheren Druckes.

Außerdem wird dann, wenn der Raumteiler 57 im Betrieb gedreht wird, der Behandlungsraum 13a, hier die Wendeln, translatorisch und dabei in die Umfangsrichtung und quer dazu, hier vertikal, bewegt

Auch bei dieser Bewegung des Behandlungsraums 13a im Mikrowellenraum 9 wird eine gleichmäßige Erhitzung der chemischen Substanz erzielt, wobei außerdem die chemische Substanz längs der Durchgangsrichtung gefördert werden kann.

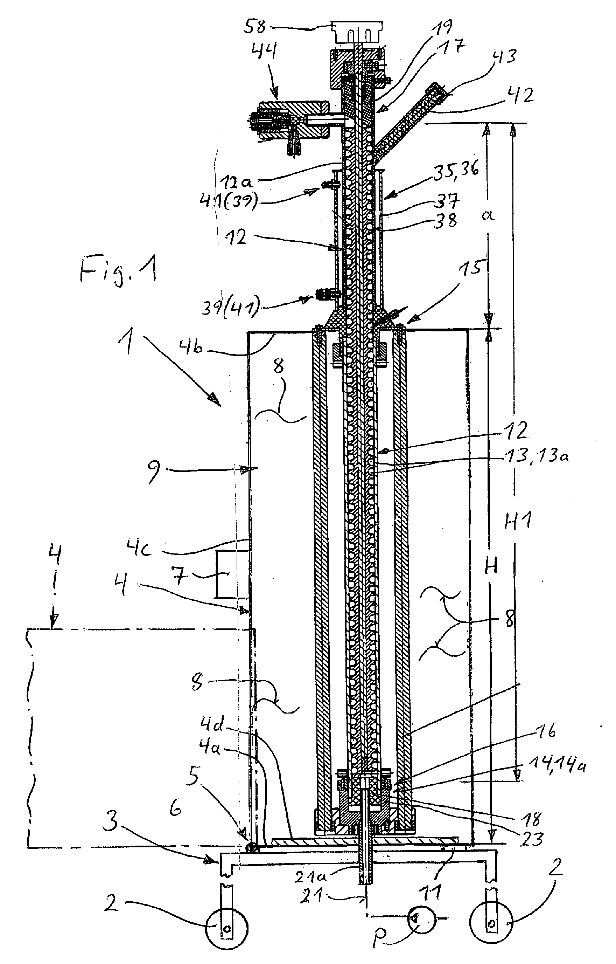

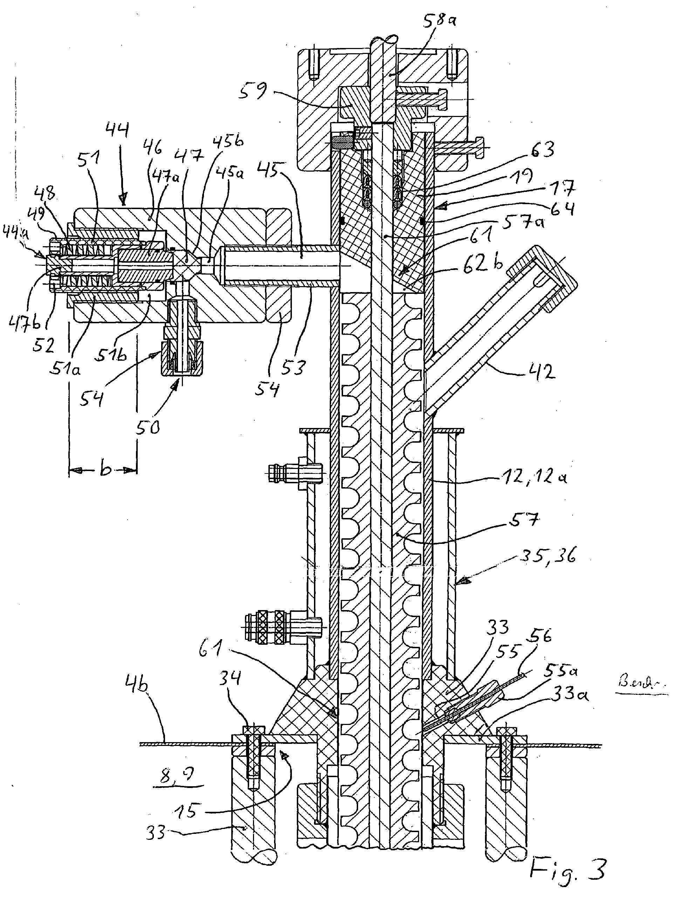

Die Vorrichtung 1 eignet sich wahlweise für eine der beiden längs des Durchflußbehälters 12 gerichteten Durchflußrichtungen. Dabei kann die Vorrichtung 1 vertikal angeordnet sein, wie es Fig. 1 mit durchgezogenen Linien zeigt, oder sie kann in eine wahlweise Neigungsstellung oder horizontal angeordnet sein, wie es Fig. 1 in Strichpunktlinien angedeutet zeigt. In der vertikalen oder in einer geneigten Stellung eignet sich die Vorrichtung 1 bei einer strömungs-.oder rieselfähigen Substanz auch für eine selbsttätige Förderung von oben nach unten aufgrund der Schwerkraft, und zwar sowohl dann, wenn die Förderschnecke still steht oder gedreht wird.

Während einer Drehung findet dann, wenn der Raumteiler in Form einer Förderschnecke ausgebildet ist, eine intensive Vermischung der chemischen Substanz statt. Dies deshalb, weil die Förderschnecke und die Umfangswand 12a des Durchflußbehälters 12 eine Mischvorrichtung 61 bilden. Die Wirksamkeit der Mischvorrichtung 61 beruht darauf, daß die chemische Substanz während der Drehung des Raumteilers 57 bzw. der Förderschnecke an der stillstehenden Umfangswand 12a kontinuierlich reibt und deshalb eine kontinuierliche Umwälzung der chemischen Substanz im Behandlungsraum 13a stattfindet. Eine weitere Durchmischung findet am Anfang und am Ende der Wendel des Behandlungsraums 13a statt, nämlich da, wo die Wendel jeweils durch einen radialen Freiraum oder Kanal 62a, 62b mit dem sich radial oder axial anschließenden Durchflußleitungsabschnitt in Verbindung steht.

Der beim Ausführungsbeispiel oben angeordnete Drehantrieb 58 kann einen Drehantriebszapfen 58a aufweisen, der drehfest mit einem Drehzapfen 57a des Raumteilers 57 verbunden ist. Diese Verbindung kann z.B. durch eine Verbindungsbuchse 59 gebildet sein, in der beide Zapfen drehfest einfassen und z.B. durch radiale Feststellschrauben gegen ein Drehen gesichert sind.

Anstelle eines Drehantriebs mit mechanischer Direktverbindung kann auch eine Magnetkupplung zwischen dem Antrieb und dem Raumteiler vorgesehen sein, in deren Bereich der Durchflußbehälter 12 geschlossen sein kann.

Der Drehzapfen 58b durchfaßt den zugehörigen Stopfen 19 in einem koaxialen Durchführungsloch, wobei der Ringspalt dazwischen durch eine Ringdichtung 63 abgedichtet ist. Beim Ausführungsbeispiel ist der Drehzapfen 58b eine den Raumteiler 57 auf einem Großteil seiner Länge durchfassende Verbindungswelle aus hinreichend widerstandsfähigem Material, z.B. Edelstahl, die mit dem Raumteiler 57 verbunden ist und den Raumteiler 57 bzw. die Förderschnecke stabilisiert.

Der obere Stopfen 19 ist vorzugsweise ebenfalls durch einen Dichtring 64 abgedichtet, der beim Ausführungsbeispiel in einer Ringnut des Stopfens 19 sitzt und mit der Innenwand der Umfangswand 12a dichtend zusammenwirkt.

Da im insbesondere aus Fig. 3 erkennbaren Ausführungsbeispiel ist das Druckbegrenzungsventil 44 so eingestellt, daß das elastisch nachgiebige Verschlußelement 47 der Durchflußleitung normalerweise schließt und erst dann öffnet, wenn sich ein bestimmter Innendruck im Behandlungsraum aufbaut. Wie Fig. 3 ebenfalls aufgrund des verhältnismäßig großen Verstellweges b des Ventils 44 erkennen läßt, kann das Ventil 44 so weit geöffnet werden, daß der Durchflußquerschnitt im Bereich des Ventilsitzes fortwährend offen ist und deshalb die Behandlung der Substanz im wesentlichen drucklos erfolgen kann.

Die Einzelteile der Vorrichtung 1 sind so ausgebildet, daß sie sich unter der Bestrahlung der Mikrowellen nicht schädlich erwärmen. Hierzu eignet sich vorzugsweise ein Kunststoff. Bestimmte Teile können aber auch aus Metall, z.B. Edelstahl, gebildet sein.

## Patentansprüche

1. Vorrichtung (1) zur Behandlung von chemischen Substanzen in einem Mikrowellenfeld, aufweisend:
- einen Mikrowellenraum (9), in dem Mikrowellenstrahlung auf die Substanzen einwirkt,
- einen Behälter (12), der sich zumindest teilweise in dem Mikrowellenraum (9) erstreckt, zur Aufnahme der zu behandelnden Substanzen, und
- eine Einrichtung zur spiralförmigen Transport der Substanzen in dem Behälter (12).

2. Vorrichtung (1) zur Behandlung von chemischen Substanzen in einem Mikrowellenfeld, aufweisend:
- einen Mikrowellenraum (9), in dem Mikrowellenstrahlung auf die Substanzen einwirkt,
- einen Durchflußbehälter (12), der sich zumindest teilweise in dem Mikrowellenraum (9) erstreckt, zur Aufnahme der Substanzen, und
- eine Mischeinrichtung (61) zur Durchmischung der Substanzen während ihres Transports in der Axialrichtung durch den Durchflußbehälter.

3. Vorrichtung nach Anspruch 1 oder 2,
**dadurch gekennzeichnet,**
**daß** die Spiralführung oder die Mischeinrichtung (61) durch eine Förderschnecke erfolgt.

4. Vorrichtung nach Anspruch 3,
**dadurch gekennzeichnet,**
**daß** die Förderschnecke durch Drehantrieb (58) eine Zwangsförderung der Substanzen in dem Durchflußbehälter (12) bewirkt.

5. Vorrichtung nach einem der vorherigen Ansprüche 2 bis 4,
**dadurch gekennzeichnet,**
**daß** der Durchflußbehälter (12) hohlzylindrisch ausgebildet ist und die Förderschnecke mit geringem Bewegungsspiel im Durchflußbehälter angeordnet ist.

6. Vorrichtung nach einem der vorherigen Ansprüche ,
**dadurch gekennzeichnet,**
**daß** die sich im Mikrowellenraum erstreckende Längsabmessung des Durchflußbehälters (12) und der Spiralführung oder der Förderschnecke ein Mehrfaches der Innenquerschnittsabmessung des Durchflußbehälters (12) beträgt, insbesondere wenigstens das 5-fache oder wenigstens das 10-fache der Innenquerschnittsabmessung beträgt.

7. Vorrichtung nach einem der vorherigen Ansprüche,
**dadurch gekennzeichnet,**
**daß** sie vertikal oder neigbar sowie in der jeweiligen Neigungsstellung feststellbar angeordnet ist.

8. Vorrichtung nach einem der vorherigen Ansprüche,
**dadurch gekennzeichnet,**
**daß** der Durchflußbehälter (12) in seinen Endbereichen jeweils mit einem axialen oder radialen Durchflußleitungsabschnitt (21; 45) verbunden ist.

9. Vorrichtung nach Anspruch 8,
**dadurch gekennzeichnet,**
**daß** der axiale Durchflußleitungsabschnitt (21) eine den Mikrowellenraum (9) begrenzende, vorzugsweise horizontale, Gehäusewand (4d) durchsetzt.

10. Vorrichtung, insbesondere nach einem der vorherigen Ansprüche,
**dadurch gekennzeichnet,**
**daß** der Durchflußbehälter (12) und vorzugsweise auch die Förderschnecke den Mikrowellenraum (9) überragen.

11. Vorrichtung nach Anspruch 10,
**dadurch gekennzeichnet,**
**daß** im überragenden Endbereich des Durchflußbehälters (12) ein Einlaß oder Auslaß für den Durchflußbehälter (12) angeordnet ist.

12. Vorrichtung nach einem der vorherigen Ansprüche,
**dadurch gekennzeichnet,**
**daß** der Behandlungsraum (13a) des Durchflußbehälters (12) mit einem Druckbegrenzungsventil (44) verbunden ist, das vorzugsweise einstellbar ist.

13. Vorrichtung nach Anspruch 12,
**dadurch gekennzeichnet,**
**daß** das Druckbegrenzungsventil (44) in einem Durchflußleitungsabschnitt, insbesondere in einem Auslaßleitungsabschnitt, angeordnet und vorzugsweise so weit verstellbar ist daß es in seiner Offenstellung die Durchflußleitung freigibt.

14. Vorrichtung nach einem der Ansprüche 10 bis 13,
**dadurch gekennzeichnet,**
**daß** im den Mikrowellenraum (9) überragenden Bereich des Durchflußbehälters (12) eine Kühl- oder Heizvorrichtung (35) angeordnet ist.

15. Vorrichtung nach einem der vorherigen Ansprüche 10 bis 14,
**dadurch gekennzeichnet,**
**daß** im den Mikrowellenraum (9) überragenden Bereich des Durchflußbehälters (12) ein Anschlußstutzen (42) angeordnet ist.

16. Verfahren zur Behandlung von chemischen Substanzen in einem Mikrowellenfeld, wobei
- in einem Mikrowellenraum (9) Mikrowellenstrahlung auf die Substanzen einwirkt,
- sich die Substanzen translatorisch in einem Behälter (12) bewegen, der sich zumindest teilweise in dem Mikrowellenraum (9) erstreckt, und
- die Substanzen in dem Behälter (12) weiterhin aktiv in einer Richtung quer zu der Translation bewegt werden.

17. Verfahren zur Behandlung von chemischen Substanzen in einem Mikrowellenfeld, wobei
- in einem Mikrowellenraum (9) Mikrowellenstrahlung auf die Substanzen einwirkt,
- sich die Substanzen in einem Behälter (12) bewegen, der sich zumindest teilweise in dem Mikrowellenraum (9) erstreckt, und
- die Substanzen in dem Behälter (12) weiterhin aktiv durch eine Mischeinrichtung (61) gemischt werden.
